# EUROPEAN PATENT SPECIFICATION

(11) **EP 3 337 001 B1**
(45) Date of publication and mention of the grant of the patent: **02.03.2022**
(21) Application number: 16203922.6
(22) Date of filing: 14.12.2016
(51) Int. Cl.: H02J 7/00, H01M 10/44, H01M 10/42

(54) **SYSTEM AND METHOD FOR DISCHARGING A DEFECTIVE BATTERY CELL**
SYSTEME UND VERFAHREN ZUM ENTLADEN EINER DEFEKTEN BATTERIEZELLE
SYSTÈME ET PROCÉDÉ POUR DÉCHARGER UNE CELLULE DE BATTERIE DÉFECTUEUSE

(43) Date of publication of application: 20.06.2018
(73) Proprietor: GS Yuasa International Ltd., Kyoto-shi, Kyoto 601-8520 (JP)
(72) Inventor: Konishi, Daisuke, 70191 Stuttgart (DE); Ashida, Yuji, 70191 Stuttgart (DE)
(74) Representative: Isarpatent

(56) References cited:
- WO-A1-2015/149186
- CN-U- 202 503 346
- US-A1- 2013 018 606
- US-A1- 2014 042 936
- US-A1- 2015 048 794

## Description

The present invention relates to a system for discharging a defective battery cell and to a corresponding method for discharging a defective battery cell.

WO2015/149136 A1 discloses a system for discharging a defective battery cell having an internal short circuit of a rechargeable battery unit having at least two battery cells connected in series, comprising a balancing circuit for balancing system for said battery cells, a control unit for controlling said balancing circuit, at least one sensor unit for detecting if a short circuit exists in at least one of the battery cells, wherein the control unit is capable of controlling the balancing circuit such that, after detection that a short circuit does exist in a battery cell, charge of this defective battery cell is transferred.

From CN 202 503 346 U it is known to use balancing circuits which aim to transfer charge from one cell to the other cells in a series connected arrangement to recover energy stored in the cells when performing balancing of the cells.

US 2014/042936 A1 discloses a balancing circuit for discharging cells in case of a short circuit in one of the cells.

Further, the invention relates to a method for discharging a defective battery cell having an internal short circuit of a rechargeable battery unit having at least two battery cells connected in series and a balancing circuit for balancing said battery cells.

Recently, rechargeable battery cells, such as lithium ion cells, are used in different applications. For example, battery cells are installed in electric vehicles and hybrid electric vehicles to supply electric drive units of such vehicles with electric power. Generally, several battery cells are combined to form a battery unit with battery cells being connected in series. The battery unit can be a rechargeable battery or a battery module for composing a modularly constructed rechargeable battery.

For various reasons, a short circuit may occur inside of a defective battery cell. Then, a large short circuit current flows inside of the defective battery cell generating heat causing overheating of the defective battery cell. This overheating may lead to a decomposition reaction of electrolyte and electrode inside of the defective battery cell generating gas inside of the defective battery cell. Then, a pressure inside of the defective battery cell increases due to the gas generation. This event is referred to as thermal runaway of a defective battery cell. A thermal runaway of one defective battery cell of a rechargeable battery unit with several battery cells may lead to a thermal runaway of further battery cells of the rechargeable battery unit. To prevent explosion of a defective battery cell in case of a thermal runaway, a battery cell may comprise a venting device for venting the battery cell and thereby reducing the pressure in the battery cell. A thermal runaway of a defective battery cell may also cause an ignition of cell components of the defective battery cell.

It is known to control operation of a rechargeable battery unit by means of a so-called battery management system (BMS) which can detect a short circuit in a defective battery cell of the rechargeable battery unit. However, so far the only measure to prevent a thermal runaway of a defective battery cell having an internal short circuit is to discharge the defective battery cell by some load, e.g. a resistor or the like. Such a safety measure is disclosed for example in US 2015/0211212 A1. Since the defective battery cell should be discharged fast, the load should be large and heavy. Additionally, the heat generation in the defective battery cell and the energy consumption of the defective battery cell are still large when using such a conventional safety measure.

### Disclosure of the invention

It is an object of the present invention to improve discharging of a battery cell of a rechargeable battery unit.

This object is solved by the independent claims. Advantageous embodiments are disclosed in the following description, the dependent claims and the drawings, wherein these embodiments either by taken alone or in any combination of at least two embodiments with each other may relate to a preferred or advantageous aspect of the invention. Embodiments of the system may be embodiments of the method and vice versa, even if this is not explicitly disclosed in the following.

A system according to the present invention for discharging a defective battery cell having an internal short circuit of a rechargeable battery unit having at least two battery cells connected in series is defined in independent claim 1. According to the invention a defective battery cell having a defect in the form of an internal short circuit of a rechargeable battery unit is discharged using the balancing circuit of the rechargeable battery unit. For this purpose, the system according to the invention comprises the control unit which controls the balancing circuit. No additional discharge load is necessary to discharge the defective battery cell. By controlling the balancing circuit according to the present invention, charge of the defective battery cell, which for example may have a slowly developing internal short circuit, can be transferred successively to the other battery cells of the rechargeable battery unit. Through this the energy of the defective battery cell is reduced so that thermal runaway and venting of the defective battery cell and ignition of battery cell components are reliably prevented.

If the rechargeable battery unit does not have a defective battery cell having an internal short circuit, what can be detected with the sensor unit of the system according to the invention, the balancing circuit of the system according to the invention is used for balancing the battery cells of the rechargeable battery unit, i.e. for drawing energy from the most charged battery cell or cells of the rechargeable battery unit and transferring the drawn energy to the least charged battery cell or cells. Through this, the battery cells of the rechargeable battery unit may have a similar or identical state of charge (SOC). For this purpose, the balancing circuit typically comprises at least one power switching converter for each battery cell. These power switching converters are also switched for discharging a defective battery cell of the rechargeable battery unit. Each power switching converter may comprise a switching device, a diode and at least one inductor. The switching device can be a field-effect transistor (FET), bipolar transistor or the like. Thus, the charge of the defective battery cell can be transferred to the other battery cells with high power.

According to the invention, when a short circuit does exist in a defective battery cell, the charge of the defective battery cell is successively transferred to other battery cells by means of the balancing circuit. This means that the charge of the defective cell is transferred in specific amounts from the defective battery cell to at least one battery cell directly adjacent to the defective battery cell, and from this adjacent battery cell to the next battery cell, and so on.

The control unit for controlling said balancing circuit may be a separate unit or may be implemented in a battery management system (BMS) of the rechargeable battery unit. The control unit controls the power switching converters of the balancing circuit to discharge a defective battery cell.

The sensor unit for detecting, if a short circuit exists in at least one of the battery cells, may be a voltage sensor, a current sensor, a temperature sensor or the like. The sensor unit is connected to the control unit to provide sensor signals to the control circuit that are indicative of a short circuit a battery cell. The sensor unit may comprise for each battery cell a separate cell sensor.

According to the invention the balancing circuit comprises at least two power switching converters each being dedicated to one of the battery cells and sharing at least one inductor, and at least two diodes each being dedicated to one of the battery cells and each allowing a charge current to flow through the respective battery cell, and the control unit is configured to control the balancing circuit such that, after detection that a short circuit does exist in a battery cell, charge of this defective battery cell is transferred to the battery cell whose dedicated power switching converter shares the inductor with the power switching converter being dedicated to the defective battery cell. If a short circuit in a defective battery cell is detected, a field-effect transistor of the power switching converter being dedicated to the defective battery cell is turned on for a specific period, and a field-effect transistor of the power switching converter sharing the inductor with the power switching converter being dedicated to the defective battery cell is kept turned off. Through this, a specific amount of energy is first stored in the inductor. At the end of said specific period the inductor releases its stored energy so that a current flows through the diode being dedicated to the functional adjacent battery cell and through this battery cell. Hereby, this battery cell is charged. This procedure can be repeated to discharge the defective battery cell. The charge added to the functional battery cell can be transferred from this battery cell to the other battery cells in the same manner. Through this, the charge of the defective battery cell can be distributed over the functional battery cells of the rechargeable battery unit.

According to the invention the control unit is configured to control the balancing circuit such that, after detection that a short circuit does exist in a battery cell, the power switching converter being dedicated to this defective cell is operated with a changed switching duty being different from a switching duty provided when no internal short circuit is detected, and that the power switching converter sharing the inductor with the power switching converter being dedicated to the defective battery cell is kept switched off. This operation may be performed as long as the state of charge (SOC) of the respective functional adjacent battery cell does not exceed a predefined threshold. By changing the switching duty of the power switching converter being dedicated to the defective battery the transfer of charge amounts from the defective battery cell to the respective functional adjacent battery cell can be controlled.

According to the invention the balancing circuit comprises at least two power switching converters each being dedicated to one of the battery cells and being inductively coupled with each other, and the control unit is configured to control the balancing circuit such that, after detection that a short circuit does exist in a battery cell, charge of this defective battery cell is transferred to the battery cell whose dedicated power switching converter is inductively coupled with the power switching converter being dedicated to the defective battery cell. If a short in a defective battery cell is detected, a field-effect transistor of the power switching converter being dedicated to the defective battery cell is turned on for a specific period, and a field-effect transistor of the power switching converter inductively coupled with the power switching converter being dedicated to the defective battery cell is kept turned off. Through this, a specific amount of charge is transferred from an inductor of the power switching converter being dedicated to the defective battery cell to an inductor of the inductively coupled power switching converter and is stored in the last-named inductor. At the end of said specific period the field-effect transistor of the inductively coupled power switching converter is turned on so that the last-named inductor releases its stored charge so that a current flows through the respective functional adjacent battery cell. Hereby, this battery cell is charged. This procedure can be repeated to discharge the defective battery cell by alternately switching the power switching converters. The charge added to the respective functional battery cell can be transferred from this battery cell to the other battery cells in the same manner. Through this, the charge of the defective battery cell can be distributed over the functional battery cells of the rechargeable battery unit.

According to a further advantageous embodiment the control unit is configured to control the balancing circuit such that, after detection that a short circuit does exist in a battery cell, a switching frequency of the power switching converter being dedicated to this defective battery cell is constant or varied over a discharge period. Hereby, the switching frequency of the power switching converter being dedicated to the defective cell can be adapted to the specific case.

According to a further advantageous embodiment the control unit is configured to control the balancing circuit such that the power switching converters are not switched at the same time. This feature is important for an optimal transfer of charge from the defective battery cell to the other battery cells.

A method according to the present invention for discharging a defective battery cell having an internal short circuit of a rechargeable battery unit having at least two battery cells connected in series and a balancing circuit for balancing said battery cells, is defined in independent claim 4.

The above described advantages of the system correspond to advantages of the method. In particular, the system according to any one of the above described embodiments or a combination of at least two of these embodiments with each other may be used to perform the method.

According to the invention charge of the defective battery cell is transferred from the defective battery cell via a power switching converter being dedicated to the defective battery cell and via a power switching converter being dedicated to another battery cell to the other battery cell by means of an inductor being shared by the power switching converters or by means of an inductive coupling of the power switching converters. The above described advantages of the corresponding embodiment of the system correspondingly relate to this embodiment of the method.

According to the invention, after detection that a short circuit does exist in a battery cell, the power switching converter being dedicated to this defective battery cell is operated with a changed switching duty being different from a switching duty provided when no internal short circuit is detected, and the power switching converter sharing the inductor with the power switching converter being dedicated to the defective battery cell or inductively coupled with the power switching converter being dedicated to the defective battery cell is kept switched off. The above described advantages of the corresponding embodiment of the system correspondingly relate to this embodiment of the method.

According to a further advantageous embodiment, after detection that a short circuit does exist in a battery cell, a switching frequency of the power switching converter being dedicated to this defective cell is constant or varied over a discharge period. The above described advantages of the corresponding embodiment of the system correspondingly relate to this embodiment of the method.

According to a further advantageous embodiment the power switching converters are not switched at the same time. The above described advantages of the corresponding embodiment of the system correspondingly relate to this embodiment of the method.

### Drawings

Further details, features and advantages of the invention are disclosed in the following description and the drawings showing:
- Figure 1: a circuit diagram of an embodiment of a system according to the present invention;
- Figure 2: an example of drive signals applied to gates of the field-effect transistors of the embodiment of the balancing circuit shown in Figure 1;
- Figure 3: a circuit diagram of a further embodiment of a system according to the present invention; and
- Figure 4: an example of drive signals applied to gates of the field-effect transistors of the embodiment of the balancing circuit shown in Figure 3.

### Preferred embodiments of the invention

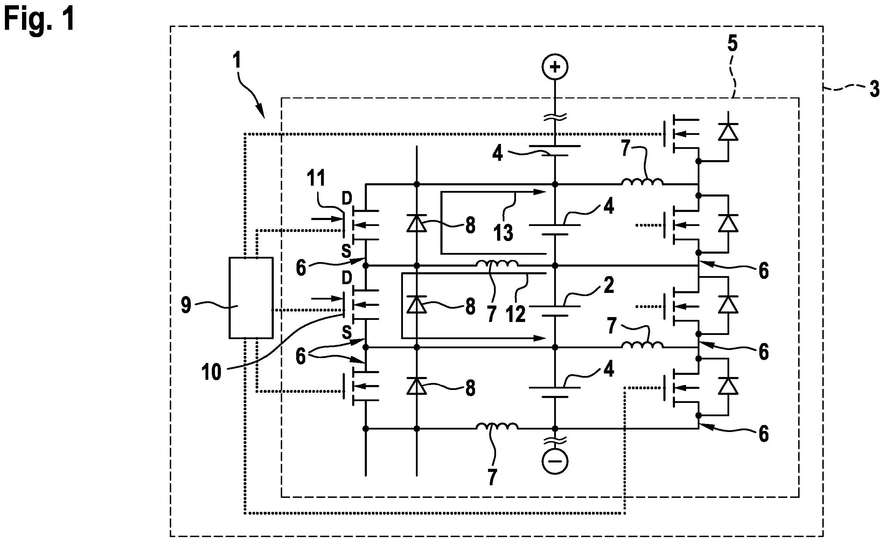

Figure 1 shows a circuit diagram of an embodiment of a system 1 according to the present invention for discharging a defective battery cell 2 having an internal short circuit of a rechargeable battery unit 3 having several battery cells 2 and 4 connected in series.

The system 1 comprises a balancing circuit 5 for balancing said battery cells 2 and 4. The balancing circuit 5 comprises several power switching converters 6 each being dedicated to one of the battery cells 2 and 4. Several pairs of the power switching converters 6 each share an inductor 7. Further, the balancing circuit 5 comprises several diodes 8 each being dedicated to one of the battery cells 2, 4 and each allowing a charge current to flow through the respective battery cell 2, 4.

Moreover, the system 1 comprises a control unit 9 for controlling said balancing circuit 5 and at least one sensor unit (not shown) for detecting, if a short circuit exists in at least one of the battery cells 2 and 4. The control unit 9 is capable of controlling the balancing circuit 5 such that, after detection that a short circuit does exist in a battery cell (here the battery cell 2), charge of this defective battery cell 2 is successively transferred to other battery cells 4 by means of the balancing circuit 5.

The control unit 9 is capable of controlling the balancing circuit 5 such that, after detection that a short circuit does exist in a battery cell (here the battery cell 2), charge of this defective battery 2 cell is transferred to the battery cell 4 whose dedicated power switching converter 6 shares the inductor 7 with the power switching converter 6 being dedicated to the defective battery cell 2. If the short circuit in the defective battery cell 2 is detected, a field-effect transistor 10 of the power switching converter 6 being dedicated to the defective battery cell 2 is turned on for a specific period, and a field-effect transistor 11 of the power switching converter 6 sharing the inductor 7 with the power switching converter 6 being dedicated to the defective battery cell 2 is kept turned off. Through this, a current indicated by arrow 12 flows through the field-effect transistor 10 and a specific amount of energy is first stored in the inductor 7. At the end of said specific period the field-effect transistor 10 is turned off and the inductor 7 releases its stored energy so that a current indicated by arrow 13 flows through the diode 8 being dedicated to the functional adjacent battery cell 4 and through this battery cell 4. Hereby, this battery cell 4 is charged. This procedure can be repeated to discharge the defective battery cell 2. The charge added to the functional battery cell 4 can be transferred from this battery cell 4 to the other battery cells 4 in the same manner. Through this, the charge of the defective battery cell 2 can be distributed over the functional battery cells 4 of the rechargeable battery unit 3.

The control unit 9 may be capable of controlling the balancing circuit 5 such that, after detection that a short circuit does exist in a battery cell (here the battery cell 2), the power switching converter 6 being dedicated to the defective battery cell 2 is operated with a changed switching duty being different from a switching duty provided when no internal short circuit is detected, and that the power switching converter 6 sharing the inductor 7 with the power switching converter 6 being dedicated to the defective battery cell 2 is kept switched off.

Moreover, the control unit 9 may be capable of controlling the balancing circuit 5 such that, after detection that a short circuit does exist in a battery cell (here the battery cell 2), a switching frequency of the power switching converter 6 being dedicated to the defective battery cell 2 is constant or varied over a discharge period. Furthermore, the control unit 9 may be capable of controlling the balancing circuit 5 such that the power switching converters 6 are not switched at the same time.

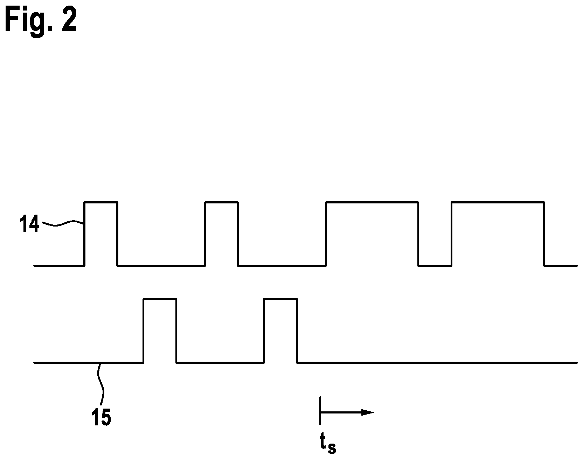

Figure 2 shows an example of drive signals 14 and 15 applied to gates of the field-effect transistors 10 and 11 of the embodiment of the balancing circuit 5 shown in Figure 1. The upper part of Figure 2 shows the drive signal 14 applied to the field-effect transistor 10, the lower part of Figure 2 shows the drive signal 15 applied to the field-effect transistor 11. When no short circuit is detected in the battery cells 2 and 4, the field-effect transistors 10 and 11 are alternately turned on and off. In any case, die field-effect transistors 10 and 11 are not switched at the same time, as shown in Figure 2. At the time tₛ a short circuit is detected in the defective battery cell 2. After the short circuit is detected, field-effect transistor 10 being dedicated to the defective battery cell 2 is operated with a changed switching duty being different from a switching duty provided when no internal short circuit is detected. Additionally, field-effect transistor 11 sharing the inductor 7 with the power switching converter 6 being dedicated to the defective battery cell 2 is kept switched off.

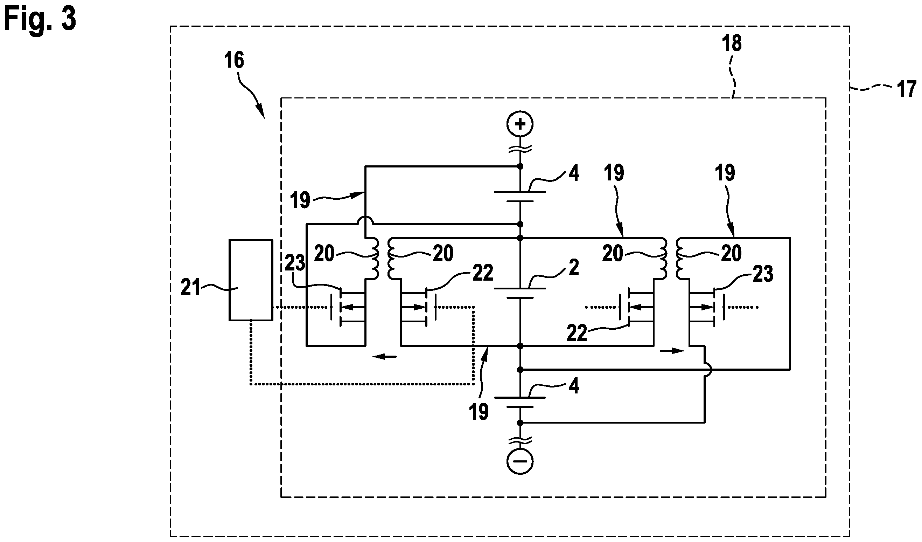

Figure 3 shows a circuit diagram of a further embodiment of a system 16 according to the present invention for discharging a defective battery cell 2 having an internal short circuit of a rechargeable battery unit 17 having several battery cells 2 and 4 connected in series.

The system 1 comprises a balancing circuit 18 for balancing said battery cells 2 and 4. The balancing circuit 18 comprises several power switching converters 19 each being dedicated to one of the battery cells 2 and 4. Pairs of power switching converters 19 dedicated to neighboring battery cells 2 and 4 are inductively coupled with each other. For this purpose, each power switching converter 19 comprises an inductor 20.

Moreover, the system 1 comprises a control unit 21 for controlling said balancing circuit 18 and at least one sensor unit (not shown) for detecting, if a short circuit exists in at least one of the battery cells 2 and 4. The control unit 21 is capable of controlling the balancing circuit 18 such that, after detection that a short circuit does exist in a battery cell (here the battery cell 2), charge of this defective battery cell 2 is successively transferred to other battery cells 4 by means of the balancing circuit 18.

The control unit 21 is capable of controlling the balancing circuit 18 such that, after detection that a short circuit does exist in a battery cell (here the battery cell 2), charge of this defective battery cell 2 is transferred to the respective battery cell 4 whose dedicated power switching converter 19 is inductively coupled with the power switching converter 19 being dedicated to the defective battery cell 2. If the short circuit in the defective battery cell 2 is detected, a field-effect transistor 22 of the power switching converter 19 being dedicated to the defective battery cell 2 is turned on for a specific period, and a field-effect transistor 23 of the power switching converter 19 inductively coupled with the power switching converter 19 being dedicated to the defective battery cell 2 is kept turned off. Through this, a specific amount of energy is transferred from the inductor 20 of the power switching converter 19 being dedicated to the defective battery cell 2 to the inductor 20 of the inductively coupled power switching converter 19 and is stored in the last-named inductor 20. At the end of said specific period the respective field-effect transistor 23 of the inductively coupled power switching converter 19 is turned on so that the last-named inductor 20 releases its stored energy and a current flows through the respective functional adjacent battery cell 4. Hereby, this battery cell 4 is charged. This procedure can be repeated to discharge the defective battery cell 2 by alternately switching the power switching converters 19. The charge added to the respective functional battery cell 4 can be transferred from this battery cell 4 to the other battery cells 4 in the same manner. Through this, the charge of the defective battery cell 2 can be distributed over the functional battery cells 4 of the rechargeable battery unit 17.

The control unit 21 may be capable of controlling the balancing circuit 18 such that, after detection that a short circuit does exist in the defective battery cell 2, the power switching converter 19 being dedicated to the defective battery cell 2 is operated with a changed switching duty being different from a switching duty provided when no internal short circuit is detected, and that the respective power switching converter 23 inductively coupled with the power switching converter 19 being dedicated to the defective battery cell 2 is kept switched off.

Moreover, the control unit 21 may be capable of controlling the balancing circuit 18 such that, after detection that a short circuit does exist in the defective battery cell 2, a switching frequency of the power switching converter 19 being dedicated to the defective battery cell 2 is constant or varied over a discharge period. Furthermore, the control unit 21 is capable of controlling the balancing circuit 18 such that the power switching converters 19 are not switched at the same time.

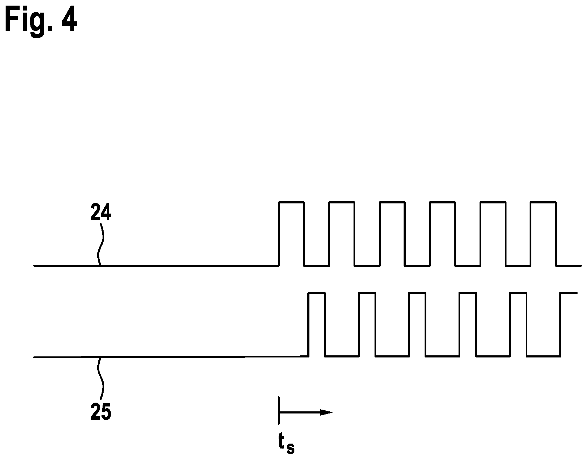

Figure 4 shows an example of drive signals 24 and 25 applied to gates of the field-effect transistors 22 and 23 of the embodiment of the balancing circuit 18 shown in Figure 3. The upper part of Figure 4 shows the drive signal 24 applied to the field-effect transistor 22, the lower part of Figure 4 shows the drive signal 25 applied to the field-effect transistor 23. When no short circuit is detected in the battery cells 2 and 4, the field-effect transistors 22 and 23 are turned off. In any case, the field-effect transistors 22 and 23 are not switched at the same time, as shown in Figure 4. At the time tₛ a short circuit is detected in the defective battery cell 2. After the short circuit is detected, field-effect transistor 22 being dedicated to the defective battery cell 2 is alternately switched on and off, and the field-effect transistor 23 is time-delayed alternately switched on and off.

## Claims

1. A system (1, 16) for discharging a defective battery cell (2) having an internal short circuit of a rechargeable battery unit (3, 17) having at least two battery cells (2, 4) connected in series, comprising a balancing circuit (5, 18) for balancing said battery cells (2, 4), a control unit (9, 21) for controlling said balancing circuit (5, 18) and at least one sensor unit for detecting, if a short circuit exists in at least one of the battery cells (2, 4),
wherein the control unit (9, 21) is configured to control the balancing circuit (5, 18) such that, after detection that a short circuit does exist in a battery cell (2, 4), charge of this defective battery cell (2) is successively transferred to other battery cells (4) by means of the balancing circuit (5, 18),
wherein the balancing circuit (5) comprises at least two power switching converters (6) each being dedicated to one of the battery cells (2, 4) and sharing at least one inductor (7), and at least two diodes (8) each being dedicated to one of the battery cells (2, 4) and each allowing a charge current to flow through the respective battery cell (2, 4), and
the control unit (9) is configured to control the balancing circuit (5) such that, after detection that a short circuit does exist in a battery cell (2, 4), charge of this defective battery cell (2) is transferred to the battery cell (4) whose dedicated power switching converter (6) shares the inductor (7) with the power switching converter (6) being dedicated to the defective battery cell (2); or the balancing circuit (18) comprises at least two power switching converters (19) each being dedicated to one of the battery cells (2, 4) and being inductively coupled with each other, and the control unit (21) is configured to control the balancing circuit (18) such that, after detection that a short circuit does exist in a battery cell (2, 4), charge of this defective battery cell (2) is transferred to the battery cell (4) whose dedicated power switching converter (19) is inductively coupled with the power switching converter (19) being dedicated to the defective battery cell (2),
wherein the control unit (9) is configured to control the balancing circuit (5) such that, after detection that a short circuit does exist in a battery cell (2, 4), the power switching converter (6, 19) being dedicated to this defective battery cell (2) is operated with a changed switching duty being different from a switching duty provided when no internal short circuit is detected, and that the power switching converter (6, 19) sharing the inductor (7) with the power switching converter (6) being dedicated to the defective battery cell (2) or inductively coupled with the power switching converter (19) being dedicated to the defective battery cell (2) is kept switched off.

2. The system (1, 16) according to claim 1, wherein the control unit (9, 21) is configured to control the balancing circuit (5, 18) such that, after detection that a short circuit does exist in a battery cell (2, 4), a switching frequency of the power switching converter (6, 19) being dedicated to this defective battery cell (2) is constant or is varied over a discharge period.

3. The system (1, 16) according to claim 1 or 2, wherein the control unit (9, 21) is configured to control the balancing circuit (5, 18) such that the power switching converters (6, 19) are not switched at the same time.

4. A method for discharging a defective battery cell (2) having an internal short circuit of a rechargeable battery unit (3, 17) having at least two battery cells (2, 4) connected in series and a balancing circuit (5, 18) for balancing said battery cells (2, 4), wherein the balancing circuit (5) comprises at least two power switching converters (6) each being dedicated to one of the battery cells (2, 4) and sharing at least one inductor (7), and at least two diodes (8) each being dedicated to one of the battery cells (2, 4) and each allowing a charge current to flow through the respective battery cell (2, 4); or the balancing circuit (18) comprises at least two power switching converters (19) each being dedicated to one of the battery cells (2, 4) and being inductively coupled with each other, comprising the steps of:
- detecting, if a short circuit exists in at least one of the battery cells (2, 4); and
- after detection that a short circuit does exist in a battery cell (2, 4), successively transferring charge of this defective battery cell (2) to other battery cells (4) by means of the balancing circuit (5, 18),
wherein charge of the defective battery cell (2) is transferred from the defective battery cell (2) via a power switching converter (6, 19) being dedicated to the defective battery cell (2) and via a power switching converter (6, 19) being dedicated to another battery cell (4) to the other battery cell (4) by means of at least one inductor (7) being shared by the power switching converters (6) or by means of an inductive coupling of the power switching converters (19),
wherein, after detection that a short circuit does exist in a battery cell (2, 4), the power switching converter (6, 19) being dedicated to this defective battery cell (2) is operated with a changed switching duty being different from a switching duty provided when no internal short circuit is detected, and the power switching converter (6, 19) sharing the inductor (7) with the power switching converter (6) being dedicated to the defective battery cell (2) or inductively coupled with the power switching converter (19) being dedicated to the defective battery cell (2) is kept switched off.

5. The method according to claim 4, wherein, after detection that a short circuit does exist in one of the battery cells (2, 4), a switching frequency of the power switching converter (6, 19) being dedicated to this defective battery cell (2) is constant or varied over a discharge period.

6. The method according to claim 4 or 5, wherein the power switching converters (6, 19) are not switched at the same time.

## Patentansprüche

1. System (1, 16) zum Entladen einer defekten Batteriezelle (2) mit einem internen Kurzschluss einer wiederaufladbaren Batterieeinheit (3, 17) mit mindestens zwei Batteriezellen (2, 4), die in Reihe geschaltet sind, umfassend eine Ausgleichsschaltung (5, 18) zum Ausgleichen der Batteriezellen (2, 4), eine Steuereinheit (9, 21) zum Steuern der Ausgleichsschaltung (5, 18) und mindestens eine Sensoreinheit zum Erfassen, ob ein Kurzschluss in mindestens einer der Batteriezellen (2, 4) vorliegt, wobei die Steuereinheit (9, 21) eingerichtet ist, um die Ausgleichsschaltung (5, 18) derart zu steuern, dass nach einer Erfassung, dass ein Kurzschluss in einer Batteriezelle (2, 4) vorliegt, eine Ladung dieser defekten Batteriezelle (2) mittels der Ausgleichsschaltung (5, 18) sukzessive auf eine andere Batteriezelle (4) übertragen wird,
wobei die Ausgleichsschaltung (5) mindestens zwei Leistungsschaltwandler (6), die jeweils einer der Batteriezellen (2, 4) zugewiesen sind und mindestens einen Induktor (7) teilen, und mindestens zwei Dioden (8), die jeweils einer der Batteriezellen (2, 4) zugewiesen sind und jeweils ermöglichen, dass ein Ladestrom durch die jeweilige Batteriezelle (2, 4) fließt, umfasst, und
wobei die Steuereinheit (9) eingerichtet ist, um die Ausgleichsschaltung (5) derart zu steuern, dass nach einer Erfassung, dass ein Kurzschluss in einer Batteriezelle (2, 4) vorliegt, eine Ladung dieser defekten Batteriezelle (2) auf die Batteriezelle (4) übertragen wird, deren zugewiesener Leistungsschaltwandler (6) den Induktor (7) mit dem Leistungsschaltwandler (6) teilt, welcher der defekten Batteriezelle (2) zugewiesen ist; oder
wobei die Ausgleichsschaltung (18) mindestens zwei Leistungsschaltwandler (19) umfasst, die jeweils einer der Batteriezellen (2, 4) zugewiesen sind und miteinander induktiv gekoppelt sind, und wobei die Steuereinheit (21) eingerichtet ist, um die Ausgleichsschaltung (18) derart zu steuern, dass nach einer Erfassung, dass ein Kurzschluss in einer Batteriezelle (2, 4) vorliegt, eine Ladung dieser defekten Batteriezelle (2) auf die Batteriezelle (4) übertragen wird, deren zugewiesener Leistungsschaltwandler (19) mit dem Leistungsschaltwandler (19) induktiv gekoppelt ist, welcher der defekten Batteriezelle (2) zugewiesen ist, wobei die Steuereinheit (9) eingerichtet ist, um die Ausgleichsschaltung (5) derart zu steuern, dass nach einer Erfassung, dass ein Kurzschluss in einer Batteriezelle (2, 4) vorliegt, der Leistungsschaltwandler (6, 19), der dieser defekten Batteriezelle (2) zugewiesen ist, mit einem veränderten Schalttastverhältnis betrieben wird, das sich von einem Schalttastverhältnis unterscheidet, das vorgesehen ist, wenn kein interner Kurzschluss erfasst wird, und dass der Leistungsschaltwandler (6, 19), der den Induktor (7) mit dem Leistungsschaltwandler (6) teilt, welcher der defekten Batteriezelle (2) zugewiesen ist, oder mit dem Leistungsschaltwandler (19) induktiv gekoppelt ist, welcher der defekten Batteriezelle (2) zugewiesen ist, in einem ausgeschalteten Zustand gehalten wird.

2. System (1, 16) nach Anspruch 1, wobei die Steuereinheit (9, 21) eingerichtet ist, um die Ausgleichsschaltung (5, 18) derart zu steuern, dass nach einer Erfassung, dass ein Kurzschluss in einer Batteriezelle (2, 4) vorliegt, eine Schaltfrequenz des Leistungsschaltwandlers (6, 19), der dieser defekten Batteriezelle (2) zugewiesen ist, konstant ist oder über einen Entladungszeitraum verändert wird.

3. System (1, 16) nach Anspruch 1 oder 2, wobei die Steuereinheit (9, 21) eingerichtet ist, um die Ausgleichsschaltung (5, 18) derart zu steuern, dass die Leistungsschaltwandler (6, 19) nicht gleichzeitig umgeschaltet werden.

4. Verfahren zum Entladen einer defekten Batteriezelle (2) mit einem internen Kurzschluss einer wiederaufladbaren Batterieeinheit (3, 17) mit mindestens zwei Batteriezellen (2, 4), die in Reihe geschaltet sind, und einer Ausgleichsschaltung (5, 18) zum Ausgleichen der Batteriezellen (2, 4), wobei die Ausgleichsschaltung (5) mindestens zwei Leistungsschaltwandler (6), die jeweils einer der Batteriezellen (2, 4) zugewiesen sind und mindestens einen Induktor (7) teilen, und mindestens zwei Dioden (8), die jeweils einer der Batteriezellen (2, 4) zugewiesen sind und jeweils ermöglichen, dass ein Ladestrom durch die jeweilige Batteriezelle (2, 4) fließt, umfasst; oder wobei die Ausgleichsschaltung (18) mindestens zwei Leistungsschaltwandler (19) umfasst, die jeweils einer der Batteriezellen (2, 4) zugewiesen sind und miteinander induktiv gekoppelt sind, umfassend die folgenden Schritte:
- Erfassen, ob ein Kurzschluss in mindestens einer der Batteriezellen (2, 4) vorliegt; und
- nach einer Erfassung, dass ein Kurzschluss in einer Batteriezelle (2, 4) vorliegt, sukzessives Übertragen einer Ladung dieser defekten Batteriezelle (2) mittels der Ausgleichsschaltung (5, 18) auf andere Batteriezellen (4),
wobei eine Ladung der defekten Batteriezelle (2) von der defekten Batteriezelle (2) über einen Leistungsschaltwandler (6, 19), welcher der defekten Batteriezelle (2) zugewiesen ist, und über einen Leistungsschaltwandler (6, 19), der einer anderen Batteriezelle (4) zugewiesen ist, auf die andere Batteriezelle (4) mittels mindestens eines Induktors (7), der von den Leistungsschaltwandlern (6) geteilt wird oder mittels einer induktiven Kopplung der Leistungsschaltwandler (19) übertragen wird,
wobei nach einer Erfassung, dass ein Kurzschluss in einer Batteriezelle (2, 4) vorliegt, der Leistungsschaltwandler (6, 19), der dieser defekten Batteriezelle (2) zugewiesen ist, mit einem veränderten Schalttastverhältnis betrieben wird, das sich von einem Schalttastverhältnis unterscheidet, das vorgesehen ist, wenn kein interner Kurzschluss erfasst wird, und der Leistungsschaltwandler (6, 19), der den Induktor (7) mit dem Leistungsschaltwandler (6) teilt, welcher der defekten Batteriezelle (2) zugewiesen ist, oder mit dem Leistungsschaltwandler (19) induktiv gekoppelt ist, welcher der defekten Batteriezelle (2) zugewiesen ist, in einem ausgeschalteten Zustand gehalten wird.

5. Verfahren nach Anspruch 4, wobei nach einer Erfassung, dass ein Kurzschluss in einer der Batteriezellen (2, 4) vorliegt, eine Schaltfrequenz des Leistungsschaltwandlers (6, 19), der dieser defekten Batteriezelle (2) zugewiesen ist, konstant ist oder über einen Entladungszeitraum verändert wird.

6. Verfahren nach Anspruch 4 oder 5, wobei die Leistungsschaltwandler (6, 19) nicht gleichzeitig umgeschaltet werden.

## Revendications

1. Système (1, 16) pour décharger un élément de batterie défectueux (2) ayant un court-circuit interne d'une unité de batterie rechargeable (3, 17) ayant au moins deux éléments de batterie (2, 4) connectés en série, comprenant un circuit d'équilibrage (5, 18) pour équilibrer lesdits éléments de batterie (2, 4), une unité de commande (9, 21) pour commander ledit circuit d'équilibrage (5, 18) et au moins une unité de détection pour détecter si un court-circuit existe dans au moins l'un des éléments de batterie (2, 4),
dans lequel l'unité de commande (9, 21) est configurée pour commander le circuit d'équilibrage (5, 18) de telle sorte que, après détection de l'existence d'un court-circuit dans un élément de batterie (2, 4), la charge de cet élément de batterie défectueux (2) est transférée successivement à d'autres éléments de batterie (4) au moyen du circuit d'équilibrage (5, 18),
dans lequel le circuit d'équilibrage (5) comprend au moins deux convertisseurs de commutation de puissance (6), chacun étant dédié à l'un des éléments de batterie (2, 4) et partageant au moins une inductance (7), et au moins deux diodes (8), chacune étant dédiée à l'un des éléments de batterie (2, 4) et chacune permettant à un courant de charge de circuler à travers l'élément de batterie respectif (2, 4),
et l'unité de commande (9) est configurée pour commander le circuit d'équilibrage (5) de telle sorte que, après détection de l'existence d'un court-circuit dans un élément de batterie (2, 4), la charge de cet élément de batterie défectueux (2) est transférée à l'élément de batterie (4) dont le convertisseur de commutation de puissance dédié (6) partage l'inductance (7) avec le convertisseur de commutation de puissance (6) dédié à l'élément de batterie défectueux (2) ; ou
le circuit d'équilibrage (18) comprend au moins deux convertisseurs de commutation de puissance (19), chacun étant dédié à l'un des éléments de batterie (2, 4) et étant couplés par induction l'un avec l'autre, et l'unité de commande (21) est configurée pour commander le circuit d'équilibrage (18) de telle sorte que, après la détection de l'existence d'un court-circuit dans un élément de batterie (2, 4), la charge de cet élément de batterie défectueux (2) est transférée à l'élément de batterie (4) dont le convertisseur de commutation de puissance dédié (19) est couplé par induction avec le convertisseur de commutation de puissance (19) dédié à l'élément de batterie défectueux (2),
dans lequel l'unité de commande (9) est configurée pour commander le circuit d'équilibrage (5) de telle sorte que, après la détection de l'existence d'un court-circuit dans un élément de batterie (2, 4), le convertisseur de commutation de puissance (6, 19) dédié à cet élément de batterie défectueux (2) est mis en œuvre avec un service de commutation modifié différent d'un service de commutation fourni lorsqu'aucun court-circuit interne n'est détecté, et que le convertisseur de commutation de puissance (6, 19) partageant l'inductance (7) avec le convertisseur de commutation de puissance (6) dédié à l'élément de batterie défectueux (2) ou couplé par induction au convertisseur de commutation de puissance (19) dédié à l'élément de batterie défectueux (2) est maintenu hors tension.

2. Système (1, 16) selon la revendication 1, dans lequel l'unité de commande (9, 21) est configurée pour commander le circuit d'équilibrage (5, 18) de telle sorte que, après détection de l'existence d'un court-circuit dans un élément de batterie (2, 4), une fréquence de commutation du convertisseur de commutation de puissance (6, 19) dédié à cet élément de batterie défectueux (2) est constante ou varie sur une période de décharge.

3. Système (1, 16) selon la revendication 1 ou 2, dans lequel l'unité de commande (9, 21) est configurée pour commander le circuit d'équilibrage (5, 18) de sorte que les convertisseurs de commutation de puissance (6, 19) ne soient pas commutés en même temps.

4. Procédé pour décharger un élément de batterie défectueux (2) ayant un court-circuit interne d'une unité de batterie rechargeable (3, 17) ayant au moins deux éléments de batterie (2, 4) connectés en série et un circuit d'équilibrage (5, 18) pour équilibrer lesdits éléments de batterie (2, 4), dans lequel le circuit d'équilibrage (5) comprend au moins deux convertisseurs de commutation de puissance (6), chacun étant dédié à l'un des éléments de batterie (2, 4) et partageant au moins une inductance (7), et au moins deux diodes (8), chacune étant dédiée à l'un des éléments de batterie (2, 4) et chacune permettant à un courant de charge de circuler à travers l'élément de batterie respectif (2, 4) ; ou le circuit d'équilibrage (18) comprend au moins deux convertisseurs de commutation de puissance (19), chacun étant dédié à l'un des éléments de batterie (2, 4) et étant couplés par induction l'un à l'autre, comprenant les étapes consistant à :
- détecter si un court-circuit existe dans au moins un des éléments de batterie (2, 4) ; et
- après détection de l'existence d'un court-circuit dans un élément de batterie (2, 4), transférer successivement la charge de cet élément de batterie défectueux (2) à d'autres éléments de batterie (4) au moyen du circuit d'équilibrage (5, 18),
dans lequel la charge de l'élément de batterie défectueux (2) est transférée depuis l'élément de batterie défectueux (2) via un convertisseur de commutation de puissance (6, 19) dédié à l'élément de batterie défectueux (2) et via un convertisseur de commutation de puissance (6, 19) dédié à un autre élément de batterie (4) à l'autre élément de batterie (4) au moyen d'au moins une inductance (7) partagée par les convertisseurs de commutation de puissance (6) ou au moyen d'un couplage inductif des convertisseurs de commutation de puissance (19),
dans lequel, après la détection de l'existence d'un court-circuit dans un élément de batterie (2, 4), le convertisseur de commutation de puissance (6, 19) dédié à cet élément de batterie défectueux (2) est mis en œuvre avec un service de commutation modifié différent d'un service de commutation prévu lorsqu'aucun court-circuit interne n'est détecté, et le convertisseur de commutation de puissance (6, 19) partageant l'inductance (7) avec le convertisseur de commutation de puissance (6) dédié à l'élément de batterie défectueux (2) ou couplé par induction au convertisseur de commutation de puissance (19) dédié à l'élément de batterie défectueux (2) est maintenu hors tension.

5. Procédé selon la revendication 4, dans lequel, après détection de l'existence d'un court-circuit dans l'un des éléments de batterie (2, 4), une fréquence de commutation du convertisseur de commutation de puissance (6, 19) dédié à cet élément de batterie défectueux (2) est constante ou varie sur une période de décharge.

6. Procédé selon la revendication 4 ou 5, dans lequel les convertisseurs de commutation de puissance (6, 19) ne sont pas commutés en même temps.
